# EUROPEAN PATENT APPLICATION

(11) **EP 4 517 793 A2**
(43) Date of publication of application: **05.03.2025**
(21) Application number: 24184606.2
(22) Date of filing: 26.06.2024
(51) Int. Cl.: H01G 4/30, H01G 4/12, H01G 4/008, H01G 4/012, C04B 35/465

(54) **MULTILAYER CERAMIC CAPACITOR HAVING A DIELECTRIC BASED ON BARIUM TITANATE WHICH COMPRISES INDIUM**

(30) Priority: 29.08.2023 KR 20230113901; 21.11.2023 KR 20230162748
(71) Applicant: Samsung Electro-Mechanics Co., Ltd., Suwon-si, Gyeonggi-do (KR)
(72) Inventor: Choi, Wonmi, 16674 Suwon-si, Gyeonggi-do (KR); Lee, Sunghwan, 16674 Suwon-si, Gyeonggi-do (KR)
(74) Representative: Grünecker Patent- und Rechtsanwälte PartG mbB

(57) **Abstract**

A multilayer capacitor (100) comprising:

a capacitor body (110) including a dielectric layer (111) and an internal electrode (121, 122), and

an external electrode (131, 132) disposed outside the capacitor body (110),

wherein the capacitor body (110) comprises titanium (Ti) and indium (In), and

wherein, in the entire capacitor body (110), a content of indium (In) based on 100 moles of titanium (Ti) is 0.2 moles to 4 moles.

The dielectric layer (111) includes as main component a barium titanate-based compound, and as subcomponent indium (In).

## Description

### BACKGROUND

### (a) Technical Field

The present disclosure relates to a multilayer capacitor.

### (b) Description of the Related Art

Recently, as electronic devices have rapidly become multifunctional and smaller in size, electronic parts also have rapidly been reduced in size along with an improvement in performance. In addition, there is a substantial increase in demand for high reliability of the electric devices used in automobiles, network equipment, or the like and the electronic parts for industrial use.

In order to meet such market demands, competition for technology development of passive parts such as inductors, capacitors, or resistors is being accelerated. In particular, a lot of effort is required to preoccupy the market by developing various products of multilayer capacitors (MLCC), which are the passive parts and whose use and usage are continuously increasing.

In addition, the multilayer capacitors are manufactured by stacking dielectric layers and internal electrodes and used in various electronic devices such as mobile phones, laptops, LCD TVs, and the like.

With recent technological advancements, multilayer capacitors are required to be miniaturized and have high capacities, and this requires a reduction in the thickness of the internal electrodes and dielectric layers. As the thickness of the dielectric layer decreases, the electric field strength applied per layer becomes relatively strong, which causes a decrease in the reliability of the capacitor, and there is a problem in that the capacitance also decreases due to the deterioration of electrode connectivity.

### SUMMARY

The present disclosure attempts to provide a multilayer capacitor capable of improving connectivity of an internal electrode and improving reliability.

However, the problems to be solved by embodiments are not limited to the above-described problem and may be variously extended in a range of technical ideas included in embodiments.

A multilayer capacitor may include a capacitor body including a dielectric layer and an internal electrode, and an external electrode disposed outside the capacitor body.

The capacitor body may include titanium (Ti) and indium (In).

In the entire capacitor body, a content of the indium (In) based on 100 moles of titanium (Ti) may be 0.2 moles to 4 moles.

The dielectric layer may include a main component including barium titanate-based compound, and a subcomponent including indium (In).

The internal electrode may include a conductive metal and indium (In).

The dielectric layer may include a central portion and an interface portion located on a surface of the central portion and contacting the internal electrode.

When the content of In in the interface portion based on 100 moles of Ti is A moles, and the content of In in the central portion based on 100 moles of Ti is B moles, A>B may be satisfied.

A≥2B may be satisfied.

A may be 1.0 moles to 1.5 moles.

B may be 0.5 moles to 1.0 moles.

The internal electrode may include a central portion and an interface portion located on a surface of the central portion and contacting the dielectric layer, and

When the content of In in the interface portion based on 100 moles of Ni is C moles, and the content of In in the central portion based on 100 moles of Ni is D moles, C>D may be satisfied.

C≥3D may be satisfied.

C may be 0.5 moles to 1.0 moles.

D may be 0.05 moles to 0.5 moles.

A multilayer capacitor may include a capacitor body including a dielectric layer and an internal electrode, and an external electrode disposed outside the capacitor body.

The multilayer capacitor may include titanium (Ti) and indium (In).

In the entire multilayer capacitor, a content of the indium (In) based on 100 moles of titanium (Ti) may be 0.2 moles to 4 moles.

The external electrode may include a sintered metal layer contacting the capacitor body.

The sintered metal layer may include a conductive metal and indium (In).

The dielectric layer may include a central portion and an interface portion located on a surface of the central portion and contacting the internal electrode.

When the content of In in the interface portion based on 100 moles of Ti is A moles, and the content of In in the central portion based on 100 moles of Ti is B moles, A>B may be satisfied.

A≥2B may be satisfied.

A may be 1.0 moles to 1.5 moles.

B may be 0.5 moles to 1.0 moles.

The internal electrode may include a central portion and an interface portion located on a surface of the central portion and contacting the dielectric layer,

When the content of In in the interface portion based on 100 moles of Ni is C moles, and the content of In in the central portion based on 100 moles of Ni is D moles, C>D may be satisfied.

C≥3D may be satisfied.

C may be 0.5 moles to 1.0 moles.

D may be 0.05 moles to 0.5 moles.

A multilayer capacitor may include a capacitor body including (i) an internal electrode including indium (In), and (ii) a dielectric layer including titanium (Ti) and indium (In), and an external electrode disposed outside the capacitor body.

In the entire capacitor body, a content of indium (In) based on 100 moles of titanium (Ti) may be 0.2 moles to 4 moles.

Indium (In) may be present at an interface between the dielectric layer and the internal electrode.

The dielectric layer may include a main component including a barium titanate-based compound.

The internal electrode may further include a conductive metal.

The conductive metal may include nickel (Ni).

The barium titanate-based compound may include barium titanate.

A multilayer capacitor may include a capacitor body including a dielectric layer and an internal electrode, and an external electrode disposed outside the capacitor body.

The capacitor body may include titanium (Ti) and indium (In).

In the entire capacitor body, a content of indium (In) based on 100 moles of titanium (Ti) may be 0.2 moles to 4 moles.

The dielectric layer may include a central portion and an interface portion located on a surface of the central portion and contacting the internal electrode.

When the content of In in the interface portion based on 100 moles of Ti is A moles, and the content of In in the central portion based on 100 moles of Ti is B moles, A>B may be satisfied.

The internal electrode may include a central portion and an interface portion.

When the content of In in the interface portion of the internal electrode based on 100 moles of Ni is C moles, and the content of In in the central portion of the internal electrode based on 100 moles of Ni is D moles, C>D may be satisfied.

A≥2B and C≥3D may be satisfied.

A may be 1.0 moles to 1.5 moles, B may be 0.5 moles to 1.0 moles, C may be 0.5 moles to 1.0 moles, and D may be 0.05 moles to 0.5 moles.

The dielectric layer may include a main component including a barium titanate-based compound, and a subcomponent including indium (In).

The internal electrode may include a conductive metal and indium (In).

According to a multilayer capacitor according to an embodiment, connectivity of an internal electrode may be improved and reliability may be improved.

The various beneficial advantages and effects of the present disclosure are not limited to the above description, and will be more easily understood in the process of describing specific embodiments of the present disclosure.

### BRIEF DESCRIPTION OF THE DRAWINGS

FIG. 1 is a perspective view showing a multilayer capacitor according to an embodiment.
FIG. 2 is a cross-sectional view of a multilayer capacitor taken along line I-I' in FIG. 1.
FIG. 3 is an exploded perspective view showing a stacking structure of an internal electrode in the capacitor body in FIG. 1.
FIG. 4 is a TEM image of a central portion (indicated as 'BT') of the dielectric layer, an interface portion (indicated as 'Ni-BT INTERFACE') between the dielectric layer and the internal electrode, and a central portion (indicated as 'Ni') of the internal electrode observed by a transmission electron microscope (TEM), in a cross-section sample of a multilayer capacitor.
FIG. 5 is a TEM image of FIG. 4 mapped with Ti.
FIG. 6 is a TEM image of FIG. 4 mapped with In.
FIG. 7 is a TEM image of FIG. 4 mapped with Ni.

### DETAILED DESCRIPTION OF THE EMBODIMENTS

The present disclosure will be described more fully hereinafter with reference to the accompanying drawings, in which embodiments of the disclosure are shown. The drawings and description are to be regarded as illustrative in nature and not restrictive. Like reference numerals designate like elements throughout the specification. Further, the accompanying drawings are provided only in order to allow embodiments disclosed in the present specification to be easily understood, and are not to be interpreted as limiting the spirit disclosed in the present specification, and it is to be understood that the present disclosure includes all modifications, equivalents, and substitutions without departing from the scope and spirit of the present disclosure. In addition, some components are exaggerated, omitted, or schematically depicted in the accompanying drawings, and the dimensions of each component are not necessarily indicative of actual dimensions.

Unless explicitly described to the contrary, the word "comprise" and variations such as "comprises" or "comprising" will be understood to imply the inclusion of stated elements but not the exclusion of any other elements.

Throughout the specification, the "stacking direction" refers to the direction in which the constituent elements are sequentially stacked, and may also be the "thickness direction" perpendicular to the wide surface (main surface) of the constituent elements on the sheet, which corresponds to a T-axis direction. Also, the "side" refers to the direction extending parallel to the wide surface (main surface) from the edge of the constituent element on the sheet, which may be a "plane direction", and corresponds to the L-axis direction in the drawing. In addition, the W-axis direction in the drawing may be the "width direction".

Hereinafter, various exemplary embodiments and variations will be described in detail with reference to the drawings.

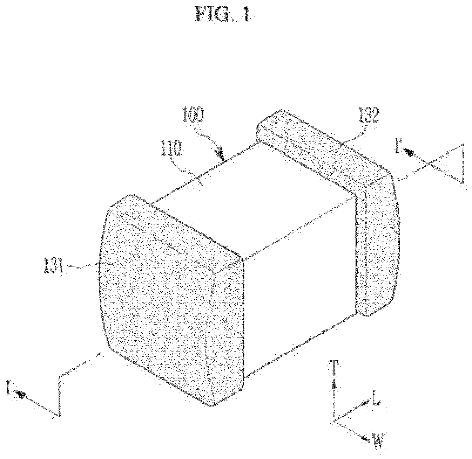

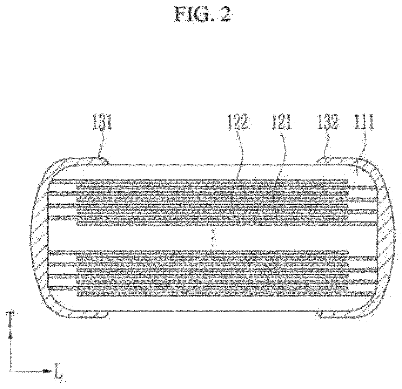

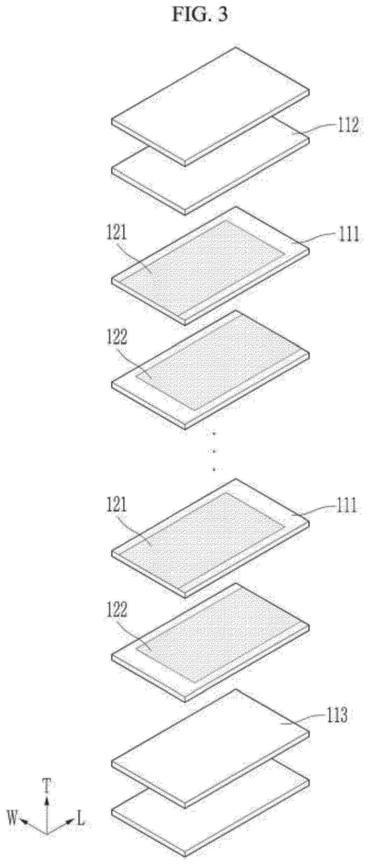

FIG. 1 is a perspective view showing a multilayer capacitor 100 according to an embodiment. FIG. 2 is a cross-sectional view of the multilayer capacitor 100 taken along line I-I' in FIG. 1. FIG. 3 is an exploded perspective view showing a stacking structure of an internal electrode in a capacitor body 110 in FIG. 1.

When directions are defined to clearly describe the present embodiment, the L-axis, W-axis, and T-axis indicated in the drawings represent the longitudinal direction, the width direction, and the thickness direction of the capacitor body 110, respectively. Herein, the thickness direction (the T-axis direction) may be a direction perpendicular to the wide surface (main surface) of the sheet-shaped components, and may be, for example, used in the same concept as the stacking direction in which the dielectric layers 111 are stacked. The longitudinal direction (L-axis direction) may be a direction substantially perpendicular to the thickness direction (the T-axis direction) in a direction extending parallel to the wide surface (main surface) of the sheet-shaped components, and may be, for example, a direction in which the first and second external electrodes 131 and 132 are disposed. The width direction (W-axis direction) may be a direction that extends parallel to the wide surface (main surface) of the sheet-shaped components and is substantially perpendicular to the thickness direction (the T-axis direction), and the length of the sheet-like components in the longitudinal direction (L-axis direction) may be longer than the length in the width direction (W-axis direction).

Referring to FIG. 1 to FIG. 3, the multilayer capacitor 100 according to an embodiment may include the capacitor body 110, and first and second external electrodes 131 and 132 disposed at both ends of the capacitor body 110 which face each other in the longitudinal direction (L-axis direction).

The multilayer capacitor 100 according to an embodiment includes the capacitor body 110 including the dielectric layer 111 and internal electrodes 121 and 122, and external electrodes 131 and 132 disposed outside the capacitor body 110, the capacitor body 110 includes titanium (Ti) and indium (In), and the content of indium (In) in the entire the capacitor body 110 based on 100 moles of titanium (Ti) is 0.2 moles to 4 moles.

As an example, the capacitor body 110 may include titanium (Ti) and indium (In), for example, the dielectric layer 111 may include In as a dielectric subcomponent, and the internal electrodes 121 and 122 may include Ni-In alloy.

A multilayer capacitor according to another embodiment 100 includes the capacitor body 110 including the dielectric layer 111 and the internal electrodes 121 and 122, and the external electrodes 131 and 132 disposed outside the capacitor body 110, the multilayer capacitor 100 includes titanium (Ti) and indium (In), and the content of indium (In) in the entire the multilayer capacitor 100 based on 100 moles of titanium (Ti) is 0.2 moles to 4 moles.

For example, a sintered metal layer included in the external electrodes 131 and 132 may include indium (In).

Indium (In) is an element with a stronger oxidation tendency than nickel (Ni). When such In is added to the conductive paste for forming the internal electrode and fired in a reducing atmosphere when manufacturing the multilayer capacitor 100, most of In is contained in the interface between the dielectric layer 111 and the internal electrodes 121 and 122.

Since In is sufficiently included in the interface between the dielectric layer 111 and the internal electrodes 121 and 122, the interfacial bonding strength between the dielectric layer 111 and the internal electrodes 121 and 122 may be improved, and In may act as a semiconductor barrier wall that prevents electron movement from the internal electrodes 121 and 122 to the dielectric layer 111, and from the dielectric layer 111 to the internal electrodes 121 and 122.

In addition, In included in the interface at a side toward the dielectric layer 111 is oxidized to In³⁺, and substituted for the Ti site of a barium titanate-based dielectric material compound. When In³⁺ is substituted for the Ti site of the dielectric material compound, In³⁺ may act as an acceptor, thereby improving reliability of the multilayer capacitor 100.

In addition, In included in the interface at a side toward the internal electrodes 121 and 122 may form an alloy with Ni, which is a metal included in the internal electrodes 121 and 122, thereby improving smoothness and connectivity of the internal electrodes 121 and 122.

When the content of In in the entire capacitor body 110 based on 100 moles of Ti is less than 0.2 moles, since In is not sufficiently included in the interface between the dielectric layer 111 and the internal electrodes 121 and 122, the effect of improving reliability of the multilayer capacitor 100 is minimal, and when it is more than 4 moles, since the vacancy of the Ti site in dielectric material compound is eliminated, reliability of the multilayer capacitor 100 may be deteriorated.

In addition, when the content of In in the entire multilayer capacitor 100 based on 100 moles of Ti is less than 0.2 moles, since In is not sufficiently included in the interface between the dielectric layer 111 and the internal electrodes 121 and 122, the effect of improving reliability of the multilayer capacitor 100 is minimal, and when it is more than 4 moles, since the vacancy of the Ti site in dielectric material compound is eliminated, reliability of the multilayer capacitor 100 may be deteriorated.

A method of measuring the content of In based on Ti in the multilayer capacitor 100 is as follows.

First, a sample in which the external electrodes 131 and 132 is removed from the multilayer capacitor 100 by milling or polishing may be prepared, or the multilayer capacitor 100 from which the external electrodes 131 and 132 are not removed may be prepared as the sample.

Subsequently, 0.1 g of sample was weighed and placed in a pressurized bottle, and a mixture was prepared by adding 6 ml of hydrochloric acid and 2 ml of nitric acid. Then, the mixture was heat treated at about 180°C for about 1 hour, and a dissolved sample was prepared through additional sonication. After filtering the dissolved sample through a 0.45 µm filter, the contents (moles) of Ti and In included in the sample was analyzed by using an inductively coupled plasma-optical emission spectroscopy (ICP-OES). Other methods and/or tools appreciated by one of ordinary skill in the art, even if not described in the present disclosure, may also be used.

The content of In based on Ti may be obtained by performing the above analysis was performed on 5 or more multilayer capacitors and by taking arithmetic average value of the measure values was calculated.

### Capacitor body

The capacitor body 110 may have, for example, a substantially hexahedral shape.

In this embodiment, for convenience of explanation, in the capacitor body 110, surfaces opposite to each other in the thickness direction (the T-axis direction) are defined as first and second surfaces, surfaces connected to the first and second surfaces and facing each other in the longitudinal direction (L-axis direction) are defined as third and fourth surfaces, and surfaces connected to the first and second surfaces, connected to the third and fourth surfaces, and facing each other in the width direction (W-axis direction) are defined as fifth and sixth surfaces.

For example, the first surface, which is a lower surface, may be a surface facing a mounting direction. In addition, the first to sixth surfaces may be flat, but the present embodiment is not limited thereto, for example, the first to sixth surfaces may be curved surfaces with a convex central portion, and an edge of each surface which is a boundary, may be round.

The shape and dimensions of the capacitor body 110 and the number of stacked dielectric layers 111 are not limited to those shown in the drawings of the present embodiment.

The capacitor body 110 is formed by stacking a plurality of dielectric layers 111 in the thickness direction (the T-axis direction) and then firing them, and includes a plurality of dielectric layers 111, and the first and second internal electrodes 121 and 122 which are alternately disposed in a thickness direction (the T-axis direction) with the dielectric layers 111 interposed therebetween.

Herein, the boundary between the respective dielectric layers 111 adjacent to each other of the capacitor body 110 may be integrated to the extent that it is difficult to check without using a scanning electron microscope (SEM).

Also, the capacitor body 110 may include an active region and cover regions 112 and 113.

The active region contributes to generating a capacitance of the multilayer capacitor 100. For example, the active region may be a region in which the first and second internal electrodes 121 and 122 are stacked and overlapped with each other along the thickness direction (the T-axis direction).

The cover regions 112 and 113 may be respectively disposed on the first and the second surfaces of the active region in the thickness direction (the T-axis direction) as thickness-direction margin portions. The cover regions 112 and 113 may be formed by stacking a single dielectric layer 111 or two or more dielectric layers 111 on an upper surface and a lower surface of the active region, respectively.

In addition, the capacitor body 110 may further include a side cover region. The side cover region is a margin portion, and may be respectively disposed on the fifth and sixth surfaces of the active region in the width direction (W-axis direction). Such a side cover region may be formed by coating a conductive paste layer for forming an internal electrode only on a portion of the surface of the dielectric green sheet, stacking dielectric green sheets on which a conductive paste layer is not coated on both side surfaces of the dielectric green sheet, and firing the same.

The cover regions 112 and 113 and the side cover regions serve to prevent damage to the first and second internal electrodes 121 and 122 due to physical or chemical stress.

### Dielectric layer

The dielectric layer 111 may include a dielectric material, and dielectric material may include a main component and the subcomponent.

The main component is a dielectric base material, has a high dielectric constant, and contributes to forming the dielectric constant of the multilayer capacitor 100.

As an example, the main component may be barium titanate-based compound, and for example, may be a dielectric material containing BaₘTiO₃ (0.995≤m≤1.010), (Ba_{1-X}Caₓ)ₘ (Ti_{1-y}Zr_{y})O₃ (0.995≤m≤1.010, 0≤x≤0.10, 0<y≤0.20), Baₘ (Ti₁₋ₓZrₓ)O₃ (0.995≤m≤1.010, x≤0.10), (Ba_{1-X}Caₓ)ₘ (Ti_{1-y}Sn_{y})O₃ (0.995≤m≤1.010, 0≤x≤0.10, 0<y≤0.20), or a combination thereof.

As an example, the main component may include BaTiOs, Ba(Ti, Zr)Os, Ba(Ti, Sn)Os, (Ba, Ca)TiO₃, (Ba, Ca)(Ti, Zr)Os, (Ba, Ca)(Ti, Sn)Os, (Ba, Sr)TiO₃, (Ba, Sr)(Ti, Zr)Os, (Ba, Sr)(Ti, Sn)Os, or a combination thereof.

As an example, the subcomponent may include indium (In), and indium (In) may be oxidized to In³⁺, and substituted for the Ti site of the barium titanate-based dielectric material compound.

In addition, the subcomponent may further include dysprosium (Dy), vanadium (V), manganese(Mn), chromium (Cr), silicon (Si), aluminum (Al), magnesium (Mg), tin (Sn), antimony(Sb), germanium (Ge), gallium (Ga), barium (Ba), lanthanum(La), yttrium (Y), actinium (Ac), cerium (Ce), praseodymium (Pr), neodymium (Nd), promethium (Pm), samarium (Sm), europium (Eu), gadolinium (Gd), terbium (Tb), holmium (Ho), erbium (Er), thulium (Tm), ytterbium (Yb), lutetium (Lu), hafnium (Hf), or a combination thereof. The dielectric material may further contain a ceramic additive, an organic solvent, a binder, a dispersing agent, or a combination thereof.

As an example, dielectric material may include a plurality of dielectric grains, and at least one of the plurality of dielectric grains may have a core-shell structure.

The dielectric crystal grain having the core-shell structure includes a dielectric core and a shell surrounding at least a portion of the core. For example, indium (In) included in the subcomponent may be included in a shell region.

The core and the shell have a different mole ratio of the subcomponent to the main component, for example, the mole ratio of the subcomponent to the main component may rapidly change at the boundary of the core and the shell. Accordingly, the boundary of the core and the shell may be easily distinguished, which may be confirmed through a transmission electron microscope-energy dispersive X-ray (TEM-EDX) analysis.

For example, the core includes no subcomponents but if any, only in a trace amount. Accordingly, the core may be composed of pure the main components alone without impurities, but the pure the main components in general may have a higher dielectric constant than the main components doped with impurity elements. Accordingly, the core may serve to maintain the dielectric constant.

The shell more includes the subcomponents than the core. In the shell, the subcomponents doped in B-sites of the main components (perovskite ABOs structure) have an effect of increasing bandgap energy that other rare earth elements and doping elements are diffused into the dielectric crystal grains. Accordingly, the subcomponents may play a role of being a barrier of suppressing the other rare earth elements and the doping elements from diffusing into the dielectric crystal grains. The shell may play a role of suppressing growth of the dielectric crystal grains and contribute to atomization of the dielectric crystal grains. In addition, in the shell, the subcomponents doped in A-sites of the main components may play a role of improving reliability and the dielectric constant.

As an example, In may be located in a central portion of the dielectric layer 111 and on a surface of the central portion of the dielectric layer 111. In may be included in an interface portion of the dielectric layer 111 contacting the internal electrodes 121 and 122.

The central portion of the dielectric layer 111 may mean, in a cross-section taken in the L-axis direction and the T-axis direction at the center of the capacitor body 110 in the W-axis direction, a central point between one point on a first side surface of a first one dielectric layer and one point on a second side surface of a dielectric layer located at a shortest distance from the one point. In addition, as well as the central point, it may mean a region within ±30% in the T-axis direction based on the central point.

The interface portion of the dielectric layer 111 is a region other than the central portion of the dielectric layer 111, and the interface disposed between the dielectric layer 111 and may mean a point spaced apart by 2 nm in the T-axis direction from the internal electrodes 121 and 122 toward the central portion of the dielectric layer 111. In addition, as well as the one point, the interface portion of the dielectric layer may mean a region within ±30% in the T-axis direction based on the one point.

In an embodiment, when the content of In in the interface portion of the dielectric layer 111 based on 100 moles of Ti is referred to as A moles, and the content of In in the central portion of the dielectric layer 111 based on 100 moles of Ti is referred to B moles, A>B may be satisfied. For example, A and B may satisfy A≥1.5B, or A≥2B.

In an embodiment, the content of In in the interface portion of the dielectric layer 111 based on 100 moles of Ti A may be 1.0 moles to 1.5 moles, and for example, may be 1.0 moles to 1.4 moles, or 1.2 moles to 1.4 moles.

In an embodiment, the content of In in the central portion of the dielectric layer 111 based on 100 moles of Ti B may be 0.5 moles to 1.0 moles, and for example, may be 0.5 moles to 0.8 moles, or 0.6 moles to 0.8 moles.

When the above numerical range is satisfied, since In is sufficiently included in the interface between the dielectric layer and the internal electrode, the interfacial bonding strength between the dielectric layer and the internal electrode may be improved, and a multilayer capacitor having improved reliability may be implemented.

The content B of In in the central portion of the dielectric layer 111 and the content A of In in the interface portion of the dielectric layer 111 described above may be measured as follows.

First, after the multilayer capacitor 100 is placed into the epoxy mixture liquid and then cured, side surfaces of the capacitor body 110 in the L-axis direction and the T-axis direction are polished to the point of 1/2 in the W-axis direction, fixed and maintained in the vacuum atmosphere chamber, and thereby a cross-section sample (hereinafter, referred to as a "cross-section sample") that is cut in the L-axis direction and the T-axis direction at the center of the capacitor body 110 in the W-axis direction was prepared.

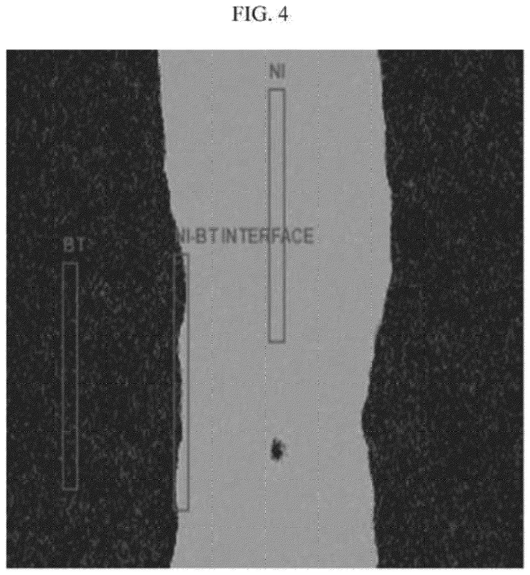

Then, by observing the cross-section sample with the transmission electron microscope (TEM), a transmission electron microscopy image as shown in FIG. 4 was prepared.

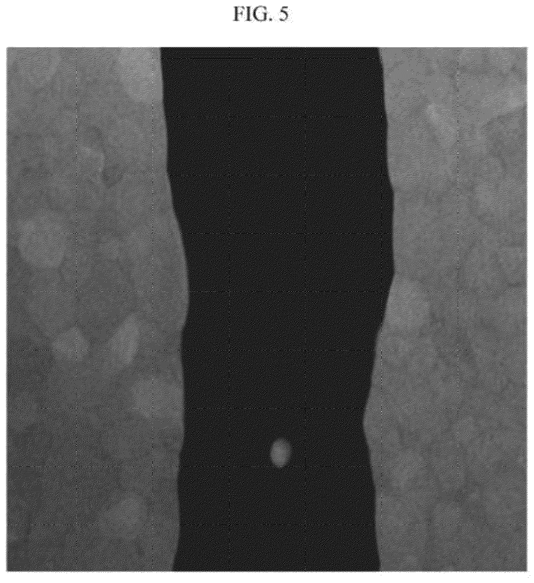

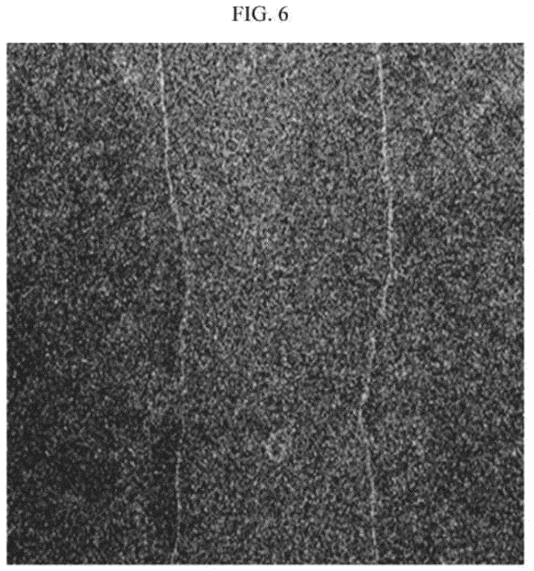

FIG. 4 is a TEM image of a central portion (indicated as 'BT') of the dielectric layer, an interface portion (indicated as 'Ni-BT INTERFACE') between the dielectric layer and the internal electrode, and a central portion (indicated as 'Ni') of the internal electrode observed by a transmission electron microscope (TEM), in a cross-section sample of a multilayer capacitor. FIG. 5 is a TEM image of FIG. 4 mapped with Ti. FIG. 6 is a TEM image of FIG. 4 mapped with In.

Referring to FIG. 4 to FIG. 6, arbitrary dielectric layers 111 are selected in the TEM image of the cross-section sample by a quantity of 5 or more, and 5 points of equal intervals corresponding to the central portion of the dielectric layer 111 and the interface portion of the dielectric layer 111 are selected. The transmission electron microscope (TEM)-energy dispersive X-ray spectrometer (EDS) quantitative analysis is performed on the selected points. As shown in FIG. 5 and FIG. 6, the contents of Ti and In were measured after mapping the cross-section sample with Ti and In, and the values of A and B may be obtained by calculating an arithmetic average value of the measure values. Other methods and/or tools appreciated by one of ordinary skill in the art, even if not described in the present disclosure, may also be used.

As an example, an average thickness of the dielectric layer 111 may be 0.05µm or more, 0.1µm or more, or may be 0.2µm or more, and 2.5µm or less, 1.5µm or less, or 0.5µm or less. When the average thickness of the dielectric layer 111 is less than 0.05µm, it may be difficult to confirm the improvement of reliability.

The average thickness of the dielectric layer 111 may be measured as follows.

First, a scanning electron microscope image obtained by observing the cross-section sample with a scanning electron microscope (SEM) was prepared.

The average thickness of the dielectric layer 111 may be obtained, in the scanning electron microscope (SEM) image of the cross-section sample, by taking a central point in the longitudinal direction (L-axis direction) or the width direction (W-axis direction) of the dielectric layer 111 as a reference point and calculating an arithmetic mean of 10 thicknesses of the dielectric layer 111 at 10 points spaced with predetermined interval from the reference point.

The predetermined interval of the 10 points may be adjusted according to a scale of the scanning electron microscope (SEM) image, for example, about 1 µm to about 100 µm, about 1 µm to about 50 µm, or about 1 µm to about 10 µm.

Herein, the 10 points must be all located within the dielectric layer 111, but when the 10 points are not located in the dielectric layer 111, the reference point may be relocated, or the intervals of the 10 points may be adjusted.

### Internal electrode

The first and second internal electrodes 121 and 122 are electrodes having different polarities, and are alternately disposed to face each other along the thickness direction with the dielectric layer 111 interposed therebetween, and one end thereof may be exposed through the third and fourth surfaces of the capacitor body 110.

The first and second internal electrodes 121 and 122 may be electrically insulated from each other by the dielectric layer 111 disposed therebetween.

Ends of the first and second internal electrodes 121 and 122 alternately exposed through the third and fourth surfaces of the capacitor body 110 are connected to the first and second external electrodes 131 and 132, respectively, to be electrically connected.

In an embodiment, the first internal electrode 121 and the second internal electrode 122 may include a conductive metal and indium (In), and may include an alloy of a conductive metal and indium (In).

As an example, the conductive metal may further include, for example, a metal such as Ni, Cu, Ag, Pd, or Au, or an alloy thereof, for example, Ag-Pd alloy. For example, when the conductive metal is Ni, the first internal electrode 121 and the second internal electrode 122 may include Ni and In, and for example, Ni-In alloy.

Also, the first and second internal electrodes 121 and 122 may include dielectric particles having the same composition as the ceramic material included in the dielectric layer 111.

The first and second internal electrodes 121 and 122 may be formed using a conductive paste containing a conductive metal. As a method of printing the conductive paste, a screen-printing method or a gravure printing method or the like may be used.

As an example, In may be located in central portions of the internal electrodes 121 and 122 and on surfaces of the central portions of the internal electrodes 121 and 122. In may be included in an interface portion of the internal electrodes 121 and 122 contacting the dielectric layer 111.

The central portions of the internal electrodes 121 and 122 may mean, in a cross-section taken in the L-axis direction and the T-axis direction at the center of the capacitor body 110 in the W-axis direction, a central point between one point on a first side surface of first one internal electrode and one point on a second side surface of an internal electrode located at a shortest distance from the one point. In addition, as well as the central point, it may mean a region within ±30% in the T-axis direction based on the central point.

The interface portion of the internal electrodes 121 and 122 is a region other than the central portions of the internal electrodes 121 and 122, and may mean a point spaced apart by 2 nm in the T-axis direction from the interface disposed between the dielectric layer 111 and the internal electrodes 121 and 122 toward the central portions of the internal electrodes 121 and 122. In addition, as well as the one point, it may mean a region within ±30% in the T-axis direction based on the one point.

In an embodiment, when the average content of In based on 100 moles of Ni in the interface portion of the internal electrodes 121 and 122 is referred to as C moles, and the average content of In based on 100 moles of Ni in the central portions of the internal electrodes 121 and 122 is referred to as D moles, C>D may be satisfied. For example, C and D may satisfy C≥1.5D, and for example C≥2D, or C≥3D may be satisfied.

In an embodiment, the average content of In based on 100 moles of Ni in the interface portion of the internal electrodes 121 and 122 C may be 0.5 moles to 1.0 moles, and for example, may be 0.5 moles to 0.8 moles, or 0.6 moles to 0.8 moles.

In an embodiment, the average content of In based on 100 moles of Ni in the central portions of the internal electrodes 121 and 122 D may be 0.05 moles to 0.5 moles, and for example, may be 0.05 moles to 0.3 moles, or 0.1 moles to 0.3 moles.

When the above numerical range is satisfied, since In is sufficiently included in the interface between the dielectric layer 111 and the internal electrodes 121 and 122, the interfacial bonding strength between the dielectric layer 111 and the internal electrodes 121 and 122 may be improved, and smoothness and connectivity of the internal electrodes 121 and 122 may be improved.

The average content D of In in the central portions of the internal electrodes 121 and 122 and the average content C of In in the interface portion of the internal electrodes 121 and 122 described above may be measured as follows.

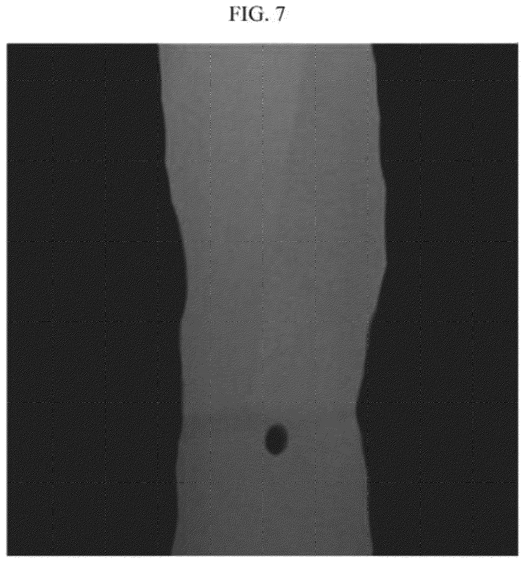

FIG. 4 is a TEM image of a central portion (indicated as 'BT') of the dielectric layer, an interface portion (indicated as 'Ni-BT INTERFACE') between the dielectric layer and the internal electrode, and a central portion (indicated as 'Ni') of the internal electrode observed by a transmission electron microscope (TEM), in the cross-section sample of a multilayer capacitor. FIG. 6 is a TEM image of FIG. 4 mapped with In. FIG. 7 is a TEM image of FIG. 4 mapped with Ni. The light gray areas in FIGs. 5 to 7 indicate the presence of the specified elements.

Arbitrary internal electrodes 121 and 122 are selected in the TEM image of the cross-section sample as shown in FIG. 4 by a quantity of 5 or more, and 5 points of equal intervals corresponding to the central portions of the internal electrodes 121 and 122 and the interface portion of the dielectric layer 111 are selected.

The transmission electron microscope (TEM)-energy dispersive X-ray spectrometer (EDS) quantitative analysis is performed on the selected points. As shown in FIG. 6 and FIG. 7, the contents of Ni and In were measured after mapping the cross-section sample with Ni and In, and the values of C and D may be obtained by calculating an arithmetic average value of the measure values. Other methods and/or tools appreciated by one of ordinary skill in the art, even if not described in the present disclosure, may also be used.

As an example, the average thickness of the first internal electrode 121 and the second internal electrode 122 may be 0.05µm or more, 0.1µm or more, 0.2µm, or 0.25µm or more, and may be 1µm or less, 0.5µm or less, 0.4µm or less, or 0.3µm or less.

The average thickness of the first internal electrode 121 or the second internal electrode 122 may be measured as follows.

The average thickness of the internal electrode may be obtained, in the scanning electron microscope (SEM) image of the cross-section sample, by taking an arithmetic mean of the thicknesses of the first internal electrode 121 or the second internal electrode 122 at 10 points spaced apart with a predetermined interval from a reference point, which is a central point in the longitudinal direction (L-axis direction) or the width direction (W-axis direction) of the first internal electrode 121 or the second internal electrode 122.

The predetermined interval of the 10 points may be adjusted according to a scale of the scanning electron microscope (SEM) image, for example, about 1 µm to about 100 µm, about 1 µm to about 50 µm, or about 1 µm to about 10 µm.

Herein, the 10 points must be all located within the first internal electrode 121 or the second internal electrode 122, but when all the 10 points may not be located in the first internal electrode 121 or the second internal electrode 122, the reference point may be relocated, or the interval between the 10 points may be adjusted.

### External electrode

The first and second external electrodes 131 and 132 are supplied with voltages of different polarities, and are electrically connected to exposed portions of the first and second internal electrodes 121 and 122, respectively.

According to the above configuration, when a predetermined voltage is applied to the first and second external electrodes 131 and 132, charges are accumulated between the first and second internal electrodes 121 and 122. At this time, a capacitance of the multilayer capacitor 100 is proportional to an overlapping area of the first and second internal electrodes 121 and 122 overlapping each other along the T-axis direction in the active region.

The first and second external electrodes 131 and 132 may respectively include first and second connection portions disposed on the third and fourth surfaces of the capacitor body 110 and connected to the first and second internal electrodes 121 and 122, and may also include first and second band portions disposed at each corner where the third and fourth surfaces of the capacitor body 110 and the first and second surfaces or the fifth and sixth surfaces thereof meet.

The first and the second band portions may respectively further extend from the first and second connection portions to the portions of the first and second surfaces or the fifth and sixth surfaces of the capacitor body 110. The first and second band portions may serve to improve adhesion strength of the first and second external electrodes 131 and 132.

For example, the first and second external electrode 131 and 132 are configured to cover the sintered metal layer contacting the capacitor body 110, a conductive resin layer configured to cover the sintered metal layer, and a plating layer configured to cover the conductive resin layer, respectively.

The sintered metal layer may include a conductive metal and indium (In).

The sintered metal layer may include copper (Cu), nickel (Ni), silver (Ag), palladium (Pd), gold (Au), platinum (Pt), tin (Sn), tungsten (W), and titanium. (Ti), lead (Pb), an alloy thereof, or a combination thereof as the conductive metal, and for example, the copper (Cu) may include a copper (Cu) alloy. For example, when the conductive metal is Cu, the sintered metal layer may include Cu and In, and as an example, Cu-In alloy. When the conductive metal includes copper, a metal other than copper may be included in an amount of less than or equal to about 5 moles based on 100 moles of copper.

As an example, the sintered metal layer may further include glass. In this case, the sintered metal layer may include a composition in which oxides are mixed with glass, and may be for example, at least one selected from silicon oxide, boron oxide, aluminum oxide, transition metal oxide, alkali metal oxide, and alkaline earth metal oxide. The transition metal may be selected from zinc (Zn), titanium (Ti), copper (Cu), vanadium (V), manganese (Mn), iron (Fe), and nickel (Ni); the alkali metal may be selected from lithium (Li), sodium (Na), and potassium (K); and the alkaline-earth metal may be selected from magnesium (Mg), calcium (Ca), strontium (Sr), and barium (Ba).

Optionally, the conductive resin layer is formed on the sintered metal layer, and for example, it may be formed to completely cover the sintered metal layer. Meanwhile, the first and second external electrodes 131 and 132 may not include the sintered metal layer, and in this case, the conductive resin layer may directly contact the capacitor body 110.

The conductive resin layer may extend to the first and second surfaces or the fifth and sixth surfaces of the capacitor body 110, and a length of the region (i.e., the band portion) where the conductive resin layer extends to the first and second surfaces or the fifth and sixth surfaces of the capacitor body 110 may be longer than a length of the region (i.e., the band portion) where the sintered metal layer extends to the first and second surfaces or the fifth and sixth surfaces of the capacitor body 110. That is, the conductive resin layer may be formed on the sintered metal layer and completely cover the sintered metal layer.

The conductive resin layer includes a resin and a conductive metal.

The resin included in the conductive resin layer is not particularly limited as long as it has bondability and impact absorption and may be mixed with conductive metal powder to form a paste. For example, it may include a phenol resin, an acrylic resin, a silicone resin, an epoxy resin, or a polyimide resin.

The conductive metal included in the conductive resin layer serves to be electrically connected to the first and second internal electrodes 121 and 122 or the sintered metal layer.

The conductive metal included in the conductive resin layer may have a spherical shape, a flake shape, or a combination thereof. That is, the conductive metal may be formed only in a flake shape, only in a spherical shape, or may have a mixed shape of a flake shape and a spherical shape.

Herein, the spherical shape may also include a shape that is not perfectly spherical, and may include a shape in which, for example, a length ratio between a major axis and a minor axis (long axis/short axis) may be less than or equal to about 1.45. The flake-type powder means a powder having a flat and elongated shape, and is not particularly limited, but may have, for example, a length ratio between a major axis and a minor axis (long axis/short axis) of greater than or equal to about 1.95.

The first and second external electrodes 131 and 132 may further include a plating layer outside the conductive resin layer.

The plating layer may include nickel (Ni), copper (Cu), tin (Sn), palladium (Pd), platinum (Pt), gold (Au), silver (Ag), tungsten (W), titanium (Ti), or lead (Pb) alone or an alloy thereof. For example, the plating layer may be the nickel (Ni) plating layer or the tin (Sn) plating layer, and may have a form in which the nickel (Ni) plating layer and the tin (Sn) plating layer are sequentially stacked or a plating layer, the nickel (Ni) plating layer, and the tin (Sn) plating layer may be sequentially stacked. In addition, the plating layer may include a plurality of nickel (Ni) plating layers and/or a plurality of tin (Sn) plating layers.

The plating layer may improve mountability of the multilayer capacitor 100 with a board, structural reliability, external durability, heat resistance, and equivalent series resistance (ESR).

### Manufacturing method of multilayer capacitor

A manufacturing method of a multilayer capacitor according to another embodiment may include, manufacturing a capacitor body including a dielectric layer and an internal electrode, and forming an external electrode outside the capacitor body.

First, manufacturing of the capacitor body will be described.

In the manufacturing process of the capacitor body, a dielectric paste to form a dielectric layer after firing and a conductive paste to form internal electrodes after firing are prepared.

The dielectric paste is prepared, for example, by the following method. The dielectric powder is uniformly mixed by means such as wet mixing, dried, and then heat treated under predetermined conditions, to obtain calcined powder. An organic vehicle or an aqueous vehicle is added to the obtained calcined powder and kneaded to prepare a dielectric paste.

A dielectric green sheet is obtained by forming the obtained dielectric paste into a sheet using a technique such as the doctor blade method. In addition, the dielectric paste may contain additives selected from various dispersants, plasticizers, dielectrics, subcomponent compounds, or glass, if necessary.

The conductive paste for the internal electrode is prepared by kneading conductive powder made of a conductive metal or an alloy thereof with a binder or a solvent.

As an example, the conductive paste for the internal electrode may be prepared to include indium (In).

The conductive paste for the internal electrode may include ceramic powder (for example, barium titanate powder) as a co-material, if necessary. The co-material may act to suppress sintering of the conductive powder during the firing process.

On the surface of the dielectric green sheet, the conductive paste for an internal electrode is coated in a predetermined pattern by various printing methods such as screen printing or a transfer method. After stacking a plurality of layers of the dielectric green sheets on which internal electrode patterns are formed, the dielectric green sheet stack is obtained by pressing in the stacking direction. At this time, the dielectric green sheets and internal electrode patterns may be stacked so that the dielectric green sheets may be disposed on the upper and lower surfaces of the dielectric green sheet stack in the stacking direction.

Optionally, the obtained the dielectric green sheet stack may be cut into predetermined dimensions by dicing or the like.

In addition, the dielectric green sheet stack may be solidified and dried to remove the plasticizer, etc. and barrel-polished by using a centrifugal barrel machine or the like after the solidification-drying. In the barrel polishing, the dielectric green sheet stack is added into a barrel container containing a medium and a polishing liquid, and then, the barrel container is applied with rotational motion or vibration to polish unnecessary parts such as burrs and the like generated during the cutting. In addition, after the barrel polishing, the dielectric green sheet stack is washed with a cleaning solution such as water and the like and dried.

The dielectric green sheet stack is treated to remove the binder and fired, obtaining the capacitor body.

The binder removal may be performed under conditions appropriately adjusted according to the main component composition of the dielectric layer or the main component composition of the internal electrode. For example, the binder removal may be performed by increasing a temperature at about 5 °C/hr to about 300 °C/hr and maintaining about 180 °C to about 400 °C for about 0.5 hours to about 24 hours. The binder removal may be performed under an air atmosphere or a reducing atmosphere.

The firing treatment may be performed under conditions appropriately adjusted according to the main component composition of the dielectric layer or the main component composition of the internal electrode. For example, the firing may be performed at about 1200 °C to about 1350 °C or about 1220 °C to about 1300 °C for about 0.5 hours to about 8 hours or about 1 hour to about 3 hours. The firing may be performed under a reducing atmosphere, for example, an atmosphere in which a mixed gas of nitrogen gas (N₂) and hydrogen gas (H₂) is humidified. When the internal electrode includes nickel (Ni) or a nickel (Ni) alloy, an oxygen partial pressure may be about 1.0×10⁻¹⁴ MPa to about 1.0×10⁻¹⁰ MPa under the firing atmosphere.

After the firing treatment, annealing may be performed, if needed. The annealing is performed for re-oxidizing the dielectric layer, and when the firing is performed under a reducing atmosphere, the annealing may be performed. The annealing may be performed under conditions appropriately adjusted according to the main component composition and the like of the dielectric layer. For example, the annealing may be performed at about 950 °C to about 1150 °C for about 0 hour to about 20 hours by increasing the temperature at about 50 °C/hour to about 500 °C/hour. The annealing may be performed under a humid nitrogen gas (N₂) atmosphere, wherein an oxygen partial pressure may be about 1.0×10⁻⁹ MPa to about 1.0×10⁻⁵ MPa.

In the binder removal treatment, the firing treatment, or the annealing treatment, in order to humidify nitrogen gas, mixed gas, or the like, a wetter or the like may be for example, used, wherein a water temperature may be about 5 °C to about 75 °C. The binder removal treatment, the firing treatment, and the annealing treatment may be performed continuously or independently.

Optionally, the third and fourth surfaces of the obtained capacitor body may be surface-treated through sandblasting, laser irradiation, barrel polishing, or the like. This surface treatment may expose the ends of the first and second internal electrodes on the outer surfaces of the third and fourth surfaces, thereby improving the electrical connection of the first and second external and the first and second internal electrodes and easily forming the alloy portion.

Subsequently, a paste for a sintered metal layer may be coated on the outer surface of the obtained capacitor body and then sintered to form a sintered metal layer.

The paste for forming the sintered metal layer may include a conductive metal and glass. The conductive metal and glass are the same as above and will not be repeatedly illustrated. In addition, the paste for forming the sintered metal layer may optionally include a subcomponent such as a binder, a solvent, a dispersant, a plasticizer, or oxide powder. For example, the binder may include ethyl cellulose, acryl, butyral, or the like, and the solvent may include an organic solvent such as terpineol, butyl carbitol, alcohol, methylethylketone, acetone, or toluene, or an aqueous solvent.

A method of coating the paste for forming the sintered metal layer on the outer surface of the capacitor body may include various printing methods such as a dip method, or screen printing, and the like, a coating method by using a dispenser, a spray method by using a spray, and the like. The paste for forming the sintered metal layer may be coated on at least the third and fourth surfaces of the capacitor body and optionally, on a portion of the first surface, the second surface, the fifth surface, or the sixth surface where the band portions of the first and second external electrodes are formed.

Thereafter, the capacitor body on which the paste for forming the sintered metal layer is coated is dried, and sintered at a temperature of about 700 °C to about 1000 °C for about 0.1 hour to about 3 hours to form the sintered metal layer.

Optionally, on the outer surface of the obtained capacitor body, a paste for forming the conductive resin layer is coated and cured to form a conductive resin layer.

The paste for forming the conductive resin layer may include a resin and optionally, a conductive metal or a non-conductive filler. The conductive metal and the resin are the same as described above and will not be repeated illustrated again. In addition, the paste for forming the conductive resin layer may optionally include a subcomponent such as a binder, a solvent, a dispersant, a plasticizer, or an oxide powder. For example, the binder may include ethyl cellulose, acryl, butyral, or the like, and the solvent may use an organic solvent such as terpineol, butyl carbitol, alcohol, methylethylketone, acetone, or toluene, or an aqueous solvent.

For example, a method of forming the conductive resin layer may include dipping the capacitor body 110 into the paste for forming the conductive resin layer to form the conductive resin layer and curing it, screen-printing or gravure-printing the paste for forming the conductive resin layer on the surface of the capacitor body 110, or coating the paste for forming the conductive resin layer on the surface of the capacitor body 110 and then curing it.

Subsequently, a plating layer is formed outside the conductive resin layer.

For example, the plating layer may be formed by a plating method, or may be formed by sputtering or electroplating (electric deposition).

Hereinafter, specific embodiments of the disclosure are presented. However, the examples described below are only for specifically illustrating or explaining the disclosure, and the scope of the disclosure is not limited thereto.

### (Examples)

### Example 1

A multilayer capacitor according to Example 1 was manufactured by weighing In such that the content of In within the multilayer capacitor may be 0.21 moles based on 100 moles of Ti, and by adjusting the oxygen partial pressure condition.

The In content in the multilayer capacitor may be obtained as follows.

First, the multilayer capacitor according to Example 1 was prepared as a sample, 0.1g of the sample was weighed and placed in a pressurized bottle, and a mixture was prepared by adding 6 ml of hydrochloric acid and 2 ml of nitric acid. Then, the mixture was heat treated at about 180°C for about 1 hour, and a dissolved sample was prepared through additional sonication. After filtering the dissolved sample through a 0.45 µm filter, the contents (moles) of Ti and In included in the sample was analyzed by using an inductively coupled plasma-optical emission spectroscopy (ICP-OES). The average content of In based on Ti may be obtained by performing the above analysis was performed on 5 or more multilayer capacitors and by taking arithmetic average value of the measure values was calculated.

In addition, in the multilayer capacitor according to Example 1, the average content A of In in an interface portion of the dielectric layer and the average content B of In in a central portion of the dielectric layer were measured, and the results are shown in Table 1 below. In addition, in the multilayer capacitor according to Example 1, the average content C of In in an interface portion of the internal electrode and the average content D of In in a central portion of the internal electrode were measured, and the results are shown in Table 2 below.

Specifically, after the multilayer capacitor according to Example 1 was placed into the epoxy mixture liquid and then cured, side surfaces of the capacitor body in the L-axis direction and the T-axis direction were polished to the point of 1/2 in the W-axis direction, fixed and maintained in the vacuum atmosphere chamber, and thereby the cross-section sample that was cut in the L-axis direction and the T-axis direction at the center of the capacitor body 110 in the W-axis direction was prepared.

Subsequently, after preparing an TEM image of the cross-section sample, arbitrary dielectric layers and arbitrary internal electrodes were selected from the image by a quantity of 5 or more. Then, 5 points of equal intervals corresponding to the central portion and the interface portion of the dielectric layer were selected, 5 points of equal intervals corresponding to the central portion and the interface portion of the internal electrode were selected.

The contents of Ti and In at the selected points were measured through transmission electron microscope (TEM)-energy dispersive X-ray spectrometer (EDS) quantitative analysis, and an arithmetic average value of the measured values were calculated to obtain A, B, C, and D values.

**(Table 1)**

| | Interface portion A of dielectric layer | Central portion B of dielectric layer |
|---|---|---|
| Average content (moles) of In based on 100 moles of Ti | 1.34 | 0.63 |

**(Table 2)**

| | Interface portion C of internal electrode | Central portion D of internal electrode |
|---|---|---|
| Average content (moles) of In based on 100 moles of Ni | 0.65 | 0.19 |

### Example 2 to 7, and Comparative Example 1 to 5

Multilayer capacitors according to Example 2 to 7 and Comparative Examples 1 to 5 were manufactured by weighing In such that the content of In within the multilayer capacitor may be the number of moles described in Table 3 below, and by adjusting the oxygen partial pressure condition.

### (Evaluation example)

### Evaluation example 1: measurement of mean time to failure (MTTF)

The mean time to failure (MTTF) value of the multilayer capacitors manufactured in Example 1 to 7, and Comparative Example 1 to 5 was measured by performing a high temperature load test under the condition of 125°C and 8V.

At this time, the time when the insulation resistance became 10 kΩ or less was set as the fixed time, the MTTF value of Comparative Example 1 was set as the reference value 1, and the relative values of the other examples and comparative examples were measured, of which the results are shown in Table 3 below.

### Evaluation example 2: Electrostatic capacitance

The electrostatic capacitance of the multilayer capacitors manufactured in Example 1 to 7, and Comparative Example 1 to 5 was measured under the condition of 1 kHZ and AC 0.5V by using an LCR meter.

The capacitance of Comparative Example 1 was used as the reference value 1, and the relative values of other Examples and Comparative Examples were measured, of which the results are shown in Table 3 below.

**(Table 3)**

| | Content of In within multilayer capacitor (mol/Ti 100 mol) | MTTF | Capacitance |
|---|---|---|---|
| Comparative Example 1 | 0 | 1 | 1 |
| Comparative Example 2 | 0.03 | 1 | 0.98 |
| Comparative Example 3 | 0.05 | 2.52 | 0.99 |
| Comparative Example 4 | 0.1 | 3.12 | 1.01 |
| Example 1 | 0.21 | 3.6 | 1.12 |
| Example 2 | 0.24 | 3.77 | 1.13 |
| Example 3 | 0.5 | 4.57 | 1.19 |
| Example 4 | 1.01 | 4.14 | 1.2 |
| Example 5 | 2.52 | 2.57 | 1.13 |
| Example 6 | 3.17 | 2.29 | 1.11 |
| Example 7 | 3.89 | 2.07 | 1.08 |
| Comparative Example 5 | 4.25 | 0.9 | 0.98 |

Referring to Table 3, it may be confirmed that, in the case of multilayer capacitors according to Examples 1 to 7, MTTF and capacitance of the capacitor were all excellent compared to Comparative Example 1 in which In was not contained in the multilayer capacitor. In addition, it may be confirmed that, in the case of Comparative Example 2 to 4 in which the content of In within the multilayer capacitor was small, capacitance value of the capacitor was lower than or similar to that of Comparative Example 1.

In addition, it may be confirmed that, in the case of Comparative Example 5 in which the content of In within the multilayer capacitor was excessively large, both the MTTF and capacitance of the capacitor were lower than those of Comparative Example 1.

While this disclosure has been described in connection with what is presently considered to be practical example embodiments, it is to be understood that the disclosure is not limited to the disclosed embodiments. On the contrary, it is intended to cover various modifications and equivalent arrangements included within the spirit and scope of the appended claims.

**The following is a list of further preferred embodiments of the invention:**
Embodiments 1: A multilayer capacitor comprising:
   a capacitor body including a dielectric layer and an internal electrode, and
   an external electrode disposed outside the capacitor body,
   wherein the capacitor body comprises titanium (Ti) and indium (In), and
   wherein, in the entire capacitor body, a content of indium (In) based on 100 moles of titanium (Ti) is 0.2 moles to 4 moles.
Embodiments 2: The multilayer capacitor of embodiment 1, wherein the dielectric layer includes a main component including a barium titanate-based compound, and a subcomponent including indium (In).
Embodiments 3: The multilayer capacitor of embodiment 1, wherein the internal electrode includes a conductive metal and indium (In).
Embodiments 4: The multilayer capacitor of embodiment 1, wherein:
   the dielectric layer includes a central portion and an interface portion located on a surface of the central portion and contacting the internal electrode; and
   when the content of In in the interface portion based on 100 moles of Ti is A moles, and the content of In in the central portion based on 100 moles of Ti is B moles, A>B is satisfied.
Embodiments 5: The multilayer capacitor of embodiment 4, wherein A≥2B is satisfied.
Embodiments 6: The multilayer capacitor of embodiment 4, wherein A is 1.0 moles to 1.5 moles.
Embodiments 7: The multilayer capacitor of embodiment 4, wherein B is 0.5 moles to 1.0 moles.
Embodiments 8: The multilayer capacitor of embodiment 1, wherein:
   the internal electrode includes a central portion and an interface portion located on a surface of the central portion and contacting the dielectric layer; and
   when the content of In in the interface portion based on 100 moles of Ni is C moles, and the content of In in the central portion based on 100 moles of Ni is D moles, C>D is satisfied.
Embodiments 9: The multilayer capacitor of embodiment 8, wherein C≥3D is satisfied.
Embodiments 10: The multilayer capacitor of embodiment 8, wherein C is 0.5 moles to 1.0 moles.
Embodiments 11: The multilayer capacitor of embodiment 8, wherein D is 0.05 moles to 0.5 moles.
Embodiments 12: A multilayer capacitor comprising:
   a capacitor body including a dielectric layer and an internal electrode, and
   an external electrode disposed outside the capacitor body,
   wherein the multilayer capacitor comprises titanium (Ti) and indium (In),
   wherein, in the entire multilayer capacitor, a content of indium (In) based on 100 moles of titanium (Ti) is 0.2 moles to 4 moles.
Embodiments 13: The multilayer capacitor of embodiment 12, wherein:
   the external electrode includes a sintered metal layer contacting the capacitor body; and
   the sintered metal layer includes a conductive metal and indium (In).
Embodiments 14: The multilayer capacitor of embodiment 12, wherein:
   the dielectric layer includes a central portion and an interface portion located on a surface of the central portion and contacting the internal electrode; and
   when the content of In in the interface portion based on 100 moles of Ti is A moles, and the content of In in the central portion based on 100 moles of Ti is B moles, A>B is satisfied.
Embodiments 15: The multilayer capacitor of embodiment 14, wherein A≥2B is satisfied.
Embodiments 16: The multilayer capacitor of embodiment 14, wherein A is 1.0 moles to 1.5 moles.
Embodiments 17: The multilayer capacitor of embodiment 14, wherein B is 0.5 moles to 1.0 moles.
Embodiments 18: The multilayer capacitor of embodiment 12, wherein:
   the internal electrode includes a central portion and an interface portion located on a surface of the central portion and contacting the dielectric layer; and
   when the content of In in the interface portion based on 100 moles of Ni is C moles, and the content of In in the central portion based on 100 moles of Ni is D moles, C>D is satisfied.
Embodiments 19: The multilayer capacitor of embodiment 18, wherein C≥3D is satisfied.
Embodiments 20: The multilayer capacitor of embodiment 18, wherein C is 0.5 moles to 1.0 moles.
Embodiments 21: The multilayer capacitor of embodiment 18, wherein D is 0.05 moles to 0.5 moles.
Embodiments 22: A multilayer capacitor comprising:
   a capacitor body including (i) an internal electrode comprising indium (In), and (ii) a dielectric layer comprising titanium (Ti) and indium (In), and
   an external electrode disposed outside the capacitor body,
   wherein, in the entire capacitor body, a content of indium (In) based on 100 moles of titanium (Ti) is 0.2 moles to 4 moles, and
   wherein indium (In) is present at an interface between the dielectric layer and the internal electrode.
Embodiments 23: The multilayer capacitor of embodiment 22, wherein the dielectric layer comprises a main component including a barium titanate-based compound.
Embodiments 24: The multilayer capacitor of embodiment 23, wherein the internal electrode further comprises a conductive metal.
Embodiments 25: The multilayer capacitor of embodiment 24, wherein the conductive metal includes nickel (Ni).
Embodiments 26: The multilayer capacitor of embodiment 25, wherein the barium titanate-based compound includes barium titanate.
Embodiments 27: A multilayer capacitor comprising:
   a capacitor body including a dielectric layer and an internal electrode, and
   an external electrode disposed outside the capacitor body,
   wherein the capacitor body comprises titanium (Ti) and indium (In),
   wherein, in the entire capacitor body, a content of indium (In) based on 100 moles of titanium (Ti) is 0.2 moles to 4 moles,
   the dielectric layer includes a central portion and an interface portion located on a surface of the central portion and contacting the internal electrode,
   when the content of In in the interface portion based on 100 moles of Ti is A moles, and the content of In in the central portion based on 100 moles of Ti is B moles, A>B is satisfied,
   the internal electrode includes a central portion and an interface portion, and
   when the content of In in the interface portion of the internal electrode based on 100 moles of Ni is C moles, and the content of In in the central portion of the internal electrode based on 100 moles of Ni is D moles, C>D is satisfied.
Embodiments 28: The multilayer capacitor of embodiment 28, wherein A≥2B and C≥3D are satisfied.
Embodiments 29: The multilayer capacitor of embodiment 28, wherein A is 1.0 moles to 1.5 moles, B is 0.5 moles to 1.0 moles, C is 0.5 moles to 1.0 moles, and D is 0.05 moles to 0.5 moles.
Embodiments 30: The multilayer capacitor of embodiment 29, wherein the dielectric layer comprises a main component including a barium titanate-based compound, and a subcomponent including indium (In).
Embodiments 31: The multilayer capacitor of embodiment 30, wherein the internal electrode includes a conductive metal and indium (In).

## Claims

1. A multilayer capacitor comprising:
a capacitor body including a dielectric layer and an internal electrode, and
an external electrode disposed outside the capacitor body,
wherein the capacitor body comprises titanium (Ti) and indium (In), and
wherein, in the entire capacitor body, a content of indium (In) based on 100 moles of titanium (Ti) is 0.2 moles to 4 moles.

2. The multilayer capacitor of claim 1, wherein the dielectric layer includes a main component including a barium titanate-based compound, and a subcomponent including indium (In).

3. The multilayer capacitor of claim 1 or 2, wherein the internal electrode includes a conductive metal and indium (In).

4. The multilayer capacitor of one of claims 1 to 3, wherein:
the dielectric layer includes a central portion and an interface portion located on a surface of the central portion and contacting the internal electrode; and
when the content of In in the interface portion based on 100 moles of Ti is A moles, and the content of In in the central portion based on 100 moles of Ti is B moles, A>B is satisfied.

5. The multilayer capacitor of claim 4, wherein A≥2B is satisfied; or
wherein A is 1.0 moles to 1.5 moles; or
wherein B is 0.5 moles to 1.0 moles.

6. The multilayer capacitor of one of claims 1 to 5, wherein:
the internal electrode includes a central portion and an interface portion located on a surface of the central portion and contacting the dielectric layer; and
when the content of In in the interface portion based on 100 moles of Ni is C moles, and the content of In in the central portion based on 100 moles of Ni is D moles, C>D is satisfied.

7. The multilayer capacitor of claim 6, wherein C≥3D is satisfied; or
wherein C is 0.5 moles to 1.0 moles; or
wherein D is 0.05 moles to 0.5 moles.

8. A multilayer capacitor comprising:
a capacitor body including a dielectric layer and an internal electrode, and
an external electrode disposed outside the capacitor body,
wherein the multilayer capacitor comprises titanium (Ti) and indium (In),
wherein, in the entire multilayer capacitor, a content of indium (In) based on 100 moles of titanium (Ti) is 0.2 moles to 4 moles.

9. The multilayer capacitor of claim 8, wherein:
the external electrode includes a sintered metal layer contacting the capacitor body; and
the sintered metal layer includes a conductive metal and indium (In).

10. The multilayer capacitor of claim 8, wherein:
the dielectric layer includes a central portion and an interface portion located on a surface of the central portion and contacting the internal electrode; and
when the content of In in the interface portion based on 100 moles of Ti is A moles, and the content of In in the central portion based on 100 moles of Ti is B moles, A>B is satisfied.

11. The multilayer capacitor of claim 10, wherein A≥2B is satisfied; or
wherein A is 1.0 moles to 1.5 moles; or
wherein B is 0.5 moles to 1.0 moles.

12. The multilayer capacitor of one of claims 8 to 11, wherein:
the internal electrode includes a central portion and an interface portion located on a surface of the central portion and contacting the dielectric layer; and
when the content of In in the interface portion based on 100 moles of Ni is C moles, and the content of In in the central portion based on 100 moles of Ni is D moles, C>D is satisfied.

13. The multilayer capacitor of claim 12, wherein C≥3D is satisfied; or
wherein C is 0.5 moles to 1.0 moles; or
wherein D is 0.05 moles to 0.5 moles.

14. A multilayer capacitor comprising:
a capacitor body including (i) an internal electrode comprising indium (In), and (ii) a dielectric layer comprising titanium (Ti) and indium (In), and
an external electrode disposed outside the capacitor body,
wherein, in the entire capacitor body, a content of indium (In) based on 100 moles of titanium (Ti) is 0.2 moles to 4 moles, and
wherein indium (In) is present at an interface between the dielectric layer and the internal electrode.

15. The multilayer capacitor of claim 14, wherein the dielectric layer comprises a main component including a barium titanate-based compound; and/or
wherein the internal electrode further comprises a conductive metal; and/or
wherein the conductive metal includes nickel (Ni); and/or
wherein the barium titanate-based compound includes barium titanate.

16. A multilayer capacitor comprising:
a capacitor body including a dielectric layer and an internal electrode, and
an external electrode disposed outside the capacitor body,
wherein the capacitor body comprises titanium (Ti) and indium (In),
wherein, in the entire capacitor body, a content of indium (In) based on 100 moles of titanium (Ti) is 0.2 moles to 4 moles,
the dielectric layer includes a central portion and an interface portion located on a surface of the central portion and contacting the internal electrode,
when the content of In in the interface portion based on 100 moles of Ti is A moles, and the content of In in the central portion based on 100 moles of Ti is B moles, A>B is satisfied,
the internal electrode includes a central portion and an interface portion, and
when the content of In in the interface portion of the internal electrode based on 100 moles of Ni is C moles, and the content of In in the central portion of the internal electrode based on 100 moles of Ni is D moles, C>D is satisfied.

17. The multilayer capacitor of claim 16, wherein A≥2B and C≥3D are satisfied; or
wherein A is 1.0 moles to 1.5 moles, B is 0.5 moles to 1.0 moles, C is 0.5 moles to 1.0 moles, and D is 0.05 moles to 0.5 moles; and/or
wherein the dielectric layer comprises a main component including a barium titanate-based compound, and a subcomponent including indium (In); and/or
wherein the internal electrode includes a conductive metal and indium (In).
